# EUROPEAN PATENT SPECIFICATION

(11) **EP 2 697 297 B1**
(45) Date of publication and mention of the grant of the patent: **24.05.2017**
(21) Application number: 11725958.0
(22) Date of filing: 13.04.2011
(51) Int. Cl.: C08J 9/32, B29C 70/02, A42B 3/12, A43B 13/18, C08J 9/00, C08J 9/232, C08J 9/236, B29K 105/04, B29L 31/48, B29K 105/16, B29K 105/12

(54) **MOULDING MATERIAL FOR CUSHIONS**
FORMMATERIAL FÜR KISSEN
MATÉRIAU À MOULER POUR REMBOURRAGES

(43) Date of publication of application: 19.02.2014
(73) Proprietor: Tryonic Limited, London SE10 8EX (IT)
(72) Inventor: DEL GUASTA, Andrea, I-31044 Montebelluna (tv) (IT); PARONETTO, Giuseppe, I-31044 Montebelluna (tv) (IT); ANTICHI, Andrea, I-31044 Montebelluna (tv) (IT)
(74) Representative: Citron, Massimiliano
(86) International application number: PCT/IB2011/051598
(87) International publication number: WO 2012/140473

(56) References cited:
- EP-A1- 0 058 141
- EP-A1- 0 585 965
- EP-A1- 0 893 332
- WO-A1-96/05240
- WO-A1-99/44813
- CN-U- 201 767 116
- US-A- 2 806 509
- US-A- 4 250 136
- US-A- 4 252 910
- US-A- 4 595 623
- US-A- 4 953 234

## Description

The invention relates to a protective padding cap of a helmet, according to claim 1. The most commonly used material for making high impact padding, such as the internal protection of helmets, is expanded polystyrene (EPS). Despite its diffusion it has disadvantages which have stimulated the search for other improved materials. In particular, polystyrene
- absorbs impact through the irreversible collapse of its structure (partially closed cell, in other words containing a collapsible alveolar structure), thus being effective for one impact only, the first;
- it is sensitive to high temperatures, and in extreme applications such as competitions in the desert (over 60°C) may modify its state and become soft;
- it has a non-negligible density.

WO 96/05240 refers to means for improving the strength of hollow mechanical structures, and especially for improving the impact strength of structural members in motor vehicles. The invention is a method of strengthening a portion of a hollow member, by inserting into the hollow member a precursor mixture comprising the combination of both components of a 2-part resin mix, where such combination alone would have a specific gravity between 1.05 and 1.25, and hollow micro-spheres having a shell of material different to that of said resin mix.

WO 99/44813 discloses a cellular material, comprising expanded micro-spheres of a polymeric gas-tight shell, to make protection equipments, such as helmets.

US 4 252 910 discloses a material for use in resilient conforming pads, cushions and the like. The material comprises elastic gas-filled hollow micro-particles cohered to a mass by a thermoplastic bonding agent semi-liquid at body temperature.

The main object is to provide a different material, preferably with the ability to absorb impact with an energy-dispersion elastic response and no structural collapse, so as to have a material reactive to multiple impacts.

The preferred basic formula of the raw material, in other words before heating in the mould, is 20-50% in weight of expanded particles (microspheres) and 80-50% in weight of non-expanded particles (microspheres). Such values ensure advantageous performances and weights and suitable for the applications, in particular excellent impact absorption results and lightness.

With the heat of the mould, where the compound hardens, all the microspheres expand (though the expanded ones less).

The non-expanded microspheres or spheres are in plastic material, and are closed spheres. They are hollow and full of gas which expands when heated making the sphere dilate and reducing the overall density of the material. It should be said that the apparent density does not change (the mould is filled completely) but the real density does, because the air between the spheres is expelled.

The expanded particles are essential for the invention. The expanded microspheres are in plastic material, in particular in thermoplastic acrylic resin. They are closed spheres, hollow and full of gas; and act as a binding agent or filler for the other spheres. In fact the expanded spheres are the filler element, the non-expanded ones acting as a binding agent.

The non-expanded particles are combined with another binding material or component which is a glue and/or viscose glue such as polyurethane, in which case however the production system would need to be accordingly modified and performance could vary. The non-expanded particles are a material which expands with heat, but a cold-setting material may be used such as a dual component glue, or polyurethane, or one which expands with a catalyst, such as polyurethane.

It is important for the microspheres to be:
- closed spheres, since the closed structure enables them to absorb and disperse energy;
- low in density and therefore lightweight;
- viscoelastic: if they were only viscose they would not return to position making the material multi-impact, while if they were only elastic they would not absorb energy;
- able to stick to each other so as to create a compact material.

The implicit lightness of the aforesaid materials is not necessary but extremely advantageous in the finished product.

Spheres which can be used for the invention are for example contained in the material Expancell®.

The particles are generally of spherical shape and are very small (10-40 µm diameter). Note however that such dimensions are not essential.

One advantage of the material is that it gives the moulded product a shape memory. When the product undergoes deformation, the expanded and non-expanded spheres compress or dilate in its mass. Thanks to the elasticity of the spheres, when the stress ceases each sphere returns to its original state, and consequently the material resumes its original form. Note too that the moulded product reacts to a second deformation in the same way as to the first, with obvious advantages for safety and repeatability of the reaction to impact.

The following is added to the basic formula as above:
- 0-2% of pyrogenic silica, for example of the Aerosil® type, to prevent the formation of lumps, facilitate flow during insertion in the mould and partially reduce the entrance of water. In general, any component reducing the entrance of water may be used, and a water-repellent component is not necessary. In fact the silica does not make the material water-repellent; but having a water-repellent material helps for example in helmet applications.

The following may be optionally added to the basic formula as above:
- about 0-3% of fibres in polyethylene or material which does not make the product absorb water, or which above all makes it tougher. The fibres are not used to make the material water-repellent but tougher.

With the silica, functionally similar anti-sedimenting components may also be used, except for example waxes, silicones or Teflon which reduce the adhesion of the particles excessively. The purpose of the anti-sedimenting agent is to improve the flow/insertion of the composite material inside the mould.

If an anti-sedimenting component such as silica is used, there being two types (hydrophilic and hydrophobic) the hydrophobic type must be chosen.

The fibres, or analogous component, are used to make the material tougher like all fibres in composites. Polyethylene fibres (PE) for example are preferred, it being possible to replace them with any fibre (carbon, Kevlar, glass etc). It is sufficient for there to be a bond between the material and the fibres.

The material has the advantage of surviving stress through various impact cycles, given that its cells are completely closed so that nothing can collapse during stress.

The best density: elasticity ratio is achieved with a specific weight of 30-40kg/m³. This density guarantees moreover excellent filling of the mould, improved conductivity and a complete and even firing of the object.

As mentioned, the material solidifies after being heated in the mould.
The expansion temperature of the material in the mould is 100-160 °C. Over such temperature there is a risk of breakdown, invalidating impact absorption performance.

Another advantage of the material is that it has a lower density than EPS. Lighter objects of the same volume can be made, or with higher absorption capacities for the same volume.

Moreover, the material has proved to be easy to process, thereby enabling a limitation of industrial costs

Experimental protective caps were made for the inside of motorbike helmets in an aluminium mould and then tested by means of artificial impact.

The test results were compared with a cap produced with the EPS normally used.

The points of impact, the same for all the helmets tested, were: left forehead, left temple, the back at the edge of the impact area, right temple, right forehead.

Three impacts were performed on each point:
1. first impact with energy of over 150J (SNELL SA2005),
2. second impact with energy of over 110J (SNELL SA2005),
3. third impact with energy over 110J (further impact for experimental purposes only).

Compared to standard EPS, G and HIC values of up to one-third less were achieved.

G is the deceleration value (negative g) which the protective device applies to the wearer's head, namely decelerating by a certain speed (established by law) up to complete standstill. The HIC (Head Injury Criterion) value represents the maximum value achievable below a standard deceleration curve, where the x-axis is the time of impact in milliseconds and the y-axis is the deceleration: it is the time interval calculated in which the area peak occurs.

## Claims

1. Protective padding cap of a helmet
made of a raw material solidified after being heated in a mould,
the material before heating being composed in weight of 20-50% of expanded particles and 80-50% of binding component,
the particles being made of plastic material, of closed shape, hollow and filled with gas,
wherein the binding component comprises
(i) non-expanded particles, in plastic material, of closed shape, hollow and filled with gas, **characterized by the fact that** the binding component further comprises
(ii) a glue,
and in that the raw material comprises 0-2% in weight of pyrogenic silica.

2. Cap according to claim 1, wherein the material comprises 0-3% in weight of fibres.

3. Cap according to claim 2, wherein the fibres comprise fibres in polyethylene.

4. Cap according to claim 2, wherein the fibres comprise carbon, Kevlar or glass fibres.

## Patentansprüche

1. Schutzabdeckung eines Helms aus verfestigtem Rohmaterial, nachdem es in einer Form erhitzt wurde,
das Material setzt sich vor dem Erhitzen im Gewicht zu 20-50% aus geschäumten Partikeln und zu 80-50% aus einer Bindemittelkomponente zusammen,
die Partikel bestehen aus Kunststoff von hohler, geschlossener Form und sind mit Gas gefüllt,
wobei die Bindemittelkomponente aus
(i) nicht-geschäumten Kunststoff-Partikeln von hohler, geschlossener Form und mit Gas gefüllt besteht,
**dadurch gekennzeichnet, dass**
die Bindemittelkomponente aus
(ii) einem Klebstoff
und der Tatsache besteht, dass
das Rohmaterial zu 0,2% des Gewichtes pyrogene Kieselsäure enthält.

2. Abdeckung nach Anspruch 1, bestehend aus 0-3% Fasern.

3. Abdeckung nach Anspruch 2, wobei die Fasern Polyethylenfasern enthalten.

4. Abdeckung nach Anspruch 2, wobei die Fasern Kohlenstoff-, Kevlar- oder Glasfasern enthalten.

## Revendications

1. Calotte de protection d'un casque constituée d'un matériau brut solidifié après avoir été réchauffé dans un moule,
le matériau avant réchauffement étant constitué, en poids, de 20 à 50% de particules expansées et de 80 à 50% de composant de liaison,
les particules étant en matière plastique, de forme fermée, creuses et remplies de gaz,
où le composant de liaison comprend
(i) des particules non expansées en matière plastique, de forme fermée, creuses et remplies de gaz,
**caractérisée en ce que**
le composant de liaison comprend
(ii) un agence de collage
et **en ce que**
le matériau brut comprend 0,2% en poids de silicium pyrogénique.

2. Calotte conforme à la revendication 1 comprenant 0-3% de fibres.

3. Calotte conforme à la revendication 2 où les fibres comprennent des fibres en polyéthylène.

4. Calotte conforme à la revendication 2 où les fibres comprennent des fibres de carbone ou de Kevlar ou de verre.
